# EUROPEAN PATENT SPECIFICATION

(11) **EP 2 525 219 B1**
(45) Date of publication and mention of the grant of the patent: **02.08.2017**
(21) Application number: 12168578.8
(22) Date of filing: 18.05.2012
(51) Int. Cl.: G01N 29/27, G01N 29/22, G01N 29/26, G10K 11/00

(54) **Multi-part mounting device for an ultrasonic transducer**
Mehrteilige Montagevorrichtung für einen Ultraschallwandler
Dispositif de montage à plusieurs parties pour transducteur ultrasonique

(30) Priority: 20.05.2011 DE 102011076224
(43) Date of publication of application: 21.11.2012
(73) Proprietor: GE Sensing & Inspection Technologies GmbH, 50354 Hürth (DE)
(72) Inventor: Oberdoerfer, York, 50354 Huerth (DE); Duerscheid, Judith, 50354 Huerth (DE); Zilz, Jochen, 50354 Huerth (DE); Warkowski, Willi, 50354 Huerth (DE); Parusel, Marek, 50354 Huerth (DE)
(74) Representative: Illingworth-Law, William Illingworth

(56) References cited:
- US-A- 3 771 354
- US-B1- 6 222 897
- US-B1- 6 825 594
- US-B1- 7 249 513

## Description

The invention relates to a mounting device for an ultrasonic transducer on or in a probe housing as well as to a generic ultrasonic testing device for the non-destructive inspection of a test object by means of ultrasound.

US-B-6 85 594 concerns an ultrasonic transducer for use in a proximity switch. The ultrasonic transducer is embedded within a housing by multiple layers with varying acoustic wave impedances.

US-B-7 249 513 concerns an ultrasound probe including a support member comprising an acoustic dampening material, a signal cable and an ultrasound transducer array mounted on the support member.

US-A-3 771 354 concerns an ultrasonic probe comprising rotatable elements having a plurality of separate piezoelectric segments secured thereon and elastically supported to contact a workpiece. A dry acoustic couplant secured to each segment forms a mechanical bond and acoustic or impedance match between the segments and the workpiece surface.

US-B-6 222 897 concerns a technique for positioning ultrasonic transducer probes to examine piping.

The principle of ultrasound inspection is known. It serves for finding casting defects or other material faults such as cracks, pockets, piping or the like. The purpose of inspecting bar material is, in particular, the inspection of internal defects and the examination for surface defects, but also the inspection of the dimensions. In this case, the ultrasonic test probe comprises at least one transmitter that is excitable by electrical pulses for generating short ultrasonic pulses that are directed into the material to be inspected of the test object. Any defect in the material to be inspected, for example a crack, a pocket or the like, causes an echo of the pulse concerned, which is reflected back to the probe and is received by the transmitter, which in this case simultaneously serves as a receiver; or the reflected echo can also be received by a separate receiver of the test probe that is disposed adjacent to the transmitter.

Measuring the delay in time between the original pulse and the return of the echo permits conclusions to be made with regard to the depth of the defect. The echo strength permits displaying the size of the defect, to mention just this possibility for evaluation as an example. Furthermore, defect determination with spatial resolution is also possible. In particular this spatially resolving defect determination requires a very exact positioning of the transducer generating the ultrasound.

As a rule, such transducers, for example one or more piezo oscillators, such as piezoceramic elements, are disposed in a housing which is designed in a variety of ways, depending on the case of application. The housing and the ultrasonic transducer(s) are generally referred to as ultrasonic test probe. The ultrasonic transducer is disposed in or on the housing in such a way that its ultrasound enters the test object to be inspected from a sound emitting surface of the transducer, generally via a coupling medium with a suitable thickness and acoustic impedance, such as water.

For example, a water area is provided and maintained between the ultrasonic transducer and the test object to be inspected, for example the pipe or the bar. For this purpose, several techniques are known, such as inspection using the immersion technique, the puddle technique or with a guided water jet. Furthermore, sealed water chambers with a test object passage often referred to as SPS also exist. After the test object has entered the sealed water chamber, the test object seals the chamber inlet and outlet. The water chamber is filled with water in order to achieve the coupling between the test probe and the test object. Furthermore, rotary inspection devices are also known. A stable water jacket is generated by rotating the entire inspecting chamber including the test probes. Disposing sealing systems at the inlet and the outlet results in a substantially tubular water jacket through which the test objects can be conveyed.

However, the ultrasound or the ultrasonic pulse is not only emitted in the desired, but also in the opposite direction. Owing to the reflection of this rear-side pulse on boundary surfaces, the ultrasonic transducer receives unwanted ultrasound echoes that cause an interference or noise in the image in the case of image-producing ultrasound inspection. This sound, which does not exit through the sound emitting surface, therefore has to be directed away from the ultrasonic transducer and/or absorbed as efficiently as possible.

In order to accomplish this, the ultrasonic transducers are glued onto an acoustically damping material. This so-called backing material permits the ultrasonic waves emitted on the rear sides of the piezo element(s) to enter, couples them out by absorption or diffuse reflection, and thus prevents interferences. Thus, suitable backing materials exhibit as high an ultrasound absorption as possible and, on the other hand, have an acoustic impedance adapted to the ultrasonic transducer material, for example the piezoceramics.

In order to achieve a high spatial resolution of the measurement, an exact and reproducible arrangement or mounting of the transducer in the housing, and if applicable also of the housing on the inspecting device, is desired. For example, it is important that the backing materials meet the processing-related requirements, i.e. survive the thermal and mechanical manufacturing processes without any damage. In order to ensure the proper function of the transducer, the chemical compatibility of the materials in touching contact must moreover be ensured, for example for backing, piezoceramics, circuit board, glue and the like, i.e. the materials used must not have a negative influence on each other, neither with regard to stability, nor with regard to processing properties; they should exhibit, for example, dimensional stability (even at higher temperatures) and result in a strongly adhesive bond together with the glues used.

For example, it is known to provide a single-part mounting device consisting of lead oxide for mounting the transducer on a housing, wherein the lead material is supposed to both cause the mechanical connection with the housing as well as provide the acoustically damping property of the backing. Due to its toxicity, the use of lead oxide is questionable and, in part, even legally prohibited. Moreover, the use of weakly cross-linked polymers as a backing material is also known. However, such backing materials frequently exhibit deficiencies in mechanical processing. In the case of higher temperatures as occur during mechanical processing, curing and drying of adhesives, thermally and/or mechanically induced stresses and deformations occur in the backing material. Because of this lack of possibilities of mechanical processing, it is impossible to provide special fixing aids, such as fixing grooves, for locally fixing a transducer in a housing.

It is therefore desirable to provide a mounting device for an ultrasonic transducer which, on the one hand, meets the demanded acoustic requirements, such as damping and/or scattering of the unwanted sound emission, and on the other hand also has a high mechanical strength and good dimensional stability.

The present disclosure describes a mounting device of claim 1 as well as an ultrasonic test probe and an ultrasonic testing device of the independent claims. It must be remarked that the features cited individually in the patent claims can be combined in any technologically meaningful manner and depict other embodiments. The description, in particular in connection with the figures, additionally characterizes and specifies embodiments of the invention.

The invention relates to a multi-part mounting device for an ultrasonic transducer. The term ultrasonic transducer is to be construed broadly and comprises, for example, a single piezoceramic ultrasonic transducer (transceiver) as well as an arrangement of several transducers that can be controlled in a phased manner (phased array), such as 1.5 D 2D phased arrays. Furthermore, the mounting system is suitable also for such transducers that have a plane sound-emitting surface, as well as such transducers that have a curved sound-emitting surface. The mounting device is characterized by consisting of multiple parts, i.e. at least a first harder part for mounting on a housing of an ultrasonic test probe, and a second softer part which retains the ultrasonic transducer and is at least in touching contact with the ultrasonic transducer. The first part has a greater hardness, in particular Shore hardness, Vickers hardness and/or Rockwell hardness, than the second part.

The term "housing" is to be construed broadly and does not require a design that wholly or partially encloses the transducer. For example, a plate-shaped design is also comprised.

Whereas the first mechanically harder part is characterized primarily by the high form stability even under mechanical stress, the second part, which according to the invention is produced from a first plastic, primarily takes on the acoustic task of the so-called backing, that is, the absorption and/or scattering of unwanted sound emission of the transducer.

According to embodiments of the invention, the first part and the second part are connected by positive fit. Thus, the "more acoustically active" but more mechanically unstable material of the second part is stabilized by the first part, with the first part, due to its hardness, providing the conditions for mechanical processing, such as machining, that are required for an exact position-retaining fixing of the transducer. The connection by positive fit between the two parts provides a secure connection. Furthermore, the plastic material of the second part provides for a particularly good chemical compatibility with regard to adhesives that are commonly used for mounting piezoceramics on the second part. Moreover, the thermal expansion coefficient of the second part is in the order of magnitude of the piezoceramics used, so that stresses in the mutual connection are avoided. It is the responsibility of the person skilled in the art to select the first plastic that is suitable, on the one hand, for chemical compatibility and, on the other hand, the acoustic requirements.

The first part can be substantially produced from a metallic and/or ceramic material and/or a second plastic with a greater hardness, in particular Shore hardness, than the first plastic, and, for example, can be entirely made from a metallic material.

According to an embodiment, the second part is configured in such a way that it forms no contact area with the housing when the mounting device is mounted on the housing of the ultrasonic test probe, in order to prevent a direct acoustic coupling between the housing and the second part.

The connection by positive fit between the first and the second part can be achieved, for example, by a tongue-and-groove connection. Preferably, the groove is in this case formed on the second part.

In order to effect an effective acoustic damping and/or scattering action by the second part, the first part is configured in such a way that it has no contact area with the ultrasonic transducer.

The first plastic used is, for example, a molded material consisting of a duroplastic. Duroplastic materials, which are also referred to as duromers, are plastics that are produced from hardenable resins. The duroplastic molded material provides the second part with the required dimensional stability.

In an embodiment, the first plastic comprises at least one epoxy resin, such as a bisphenol A epoxy resin. For example, this is a resin sold under the trade name "Araldit CY 221" to which the epoxy resin sold under the trade name "Araldit HY 956" has been added as a hardener.

The resin matrix of the second part can contain a finely dispersed phase consisting of a polymer with a low glass transition temperature. Due to this polymer phase, the damping properties of the second part is considerably improved while maintaining the good dimensional stability. In an embodiment, a silicone rubber (RTV) that crosslinks at room temperature is added to the resin matrix. The damping action can be ascribed to a scattering action and reflection on the surface of the polymer phase or the silicone rubber, and consequently, the acoustic damping effect can be specifically adjusted. Because apart from the proportion and the particle size of the polymer phase or the silicone rubber in the resin matrix, interactions between the resin matrix and the polymer phase or the rubber also determine the quality of the damping action.

Generally, the second part has a sufficient acoustic impedance, i.e. an acoustic impedance adapted to the transducer material. The impedance advantageously can be adjusted by a suitable particle-shaped material, i.e. a material with a density that is high as compared with the plastic, being added to the material of the second part, for example at a proportion of up to 50 % by volume relative to the total material. This additive, whose density is for example ≥ 3.5 g/cm³, in particular ≥ 5 g/cm³, can be an inorganic filler such as tungstic oxide or, particularly preferably, bismuth oxide. Bi₂O₃. Other additives that can be used are, for example, aluminum oxide and lead-zirconium-titanate. In principle, metallic powders, such as copper, silver and tungsten, can be used for increasing acoustic impedance, if the additive is allowed to be electrically conductive. In order to avoid sedimentation, in particular in the case of low-viscosity resin mixtures, additives known per se, such as pyrogenic silicic acid, may be added.

In an embodiment, the particle distribution of the filler has a D50 value in the range of approximately or exactly 1 µm to approximately or exactly 100 µm, for example in the range of approximately or exactly 10 µm to 50 µm, in the range of approximately or exactly 20 µm to approximately or exactly 30 µm, for example approximately or exactly 25 µm.

In an embodiment, the second part is connected to the first part by partially overmolding the latter. For example, the first part is inserted into the die of a forming mold and partially overmolded with the plastic material of the second part.

According to an embodiment, the first part comprises at least one opening for mounting the second part. A particularly durable connection is thus achieved between the first and the second part. It is thus accomplished, in particular, that no separation of the first from the second part occurs despite fracturing and/or crack formation in the plastic.

In an embodiment, the second part and the first part are configured to be at least ring-segment-shaped. For example, the first and second part are configured in such a way that the inner boundary surface of the first part defined by the inner radius is adjacent to the outer boundary surface of the second part defined by the outer radius.

The invention further relates to an ultrasonic test probe comprising at least one ultrasonic transducer, a housing and a multi-part mounting device in one of the previously described advantageous embodiments. The term ultrasonic transducer, as was mentioned above, is to be construed broadly and comprises, for example, a single piezoceramic ultrasonic transducer (transceiver) as well as an arrangement of several transducers that can be controlled in a phased manner (phased array), such as 1.5 D 2D phased arrays. Furthermore, the mounting system is suitable also for such transducers that have a plane sound-emitting surface, as well as such transducers that have a curved sound-emitting surface. The mounting device is characterized by consisting of multiple parts, i.e. at least a first harder, particularly preferred metallic part for mounting on a housing of an ultrasonic test probe, and a second softer part which retains the ultrasonic transducer and is at least in touching contact with the ultrasonic transducer. The term "housing" is to be construed broadly and does not require a design that wholly or partially encloses the transducer. For example, a plate-shaped design of the housing is also comprised.

In order to locally fix the mounting device, and thus the ultrasonic transducer, in a reliable and reproducible manner, the housing and the first part form a fit, for example an interference fit. For example, a guiding pin is provided on the housing, which, given an installation as intended of the mounting device on a housing, engages a guiding groove of the first part of the mounting device in a positive fit. The guiding groove is, for example, inserted into the harder material of the first part by machining.

In an embodiment, the transducers(s) define a curved or plane sound emitting surface facing a test object to be inspected, and the second part can be disposed adjacent to the boundary surface of the transducer or transducers which is opposite to the sound emitting surface. For example, the transducer is glued to this second part.

The invention further relates to an ultrasonic testing device for ultrasound inspection of a test object, for example a pipe, comprising: at least one ultrasonic test probe in one of the above-described embodiments, an evaluation unit, and means for generating a relative movement between the at least one test probe and the test object. The ultrasonic testing device can comprise means for generating a relative movement between the test probe and the test object during and in between the inspection steps. Various techniques can be used for acoustic coupling between the test object and the test probe: immersion technique, the puddle technique or with a guided water jet. According to aspects of the invention, the following is also possible: sealed water chamber with a test object passage often referred to as SPS. After the test object has entered the sealed water chamber, the test object seals the chamber inlet and outlet. The water chamber is filled with water in order to achieve the coupling between the test probe and the test object. Furthermore, rotary inspection devices are also known. A stable water jacket is generated by rotating the entire inspecting chamber including the test probes. Disposing sealing systems at the inlet and the outlet results in a substantially tubular water jacket through which the test object can be conveyed.

The invention as well as the technical environment is explained in more detail with reference to the figures. It must be remarked that the Figures depict a particularly preferred embodiment of the invention, but that it is not limited thereto. The Figures schematically show:
Fig. 1 shows a schematic view of a test probe according to an embodiment of the invention with a tubular test object;
Fig. 2 shows a sectional view taken along section line AA of Figure 1;

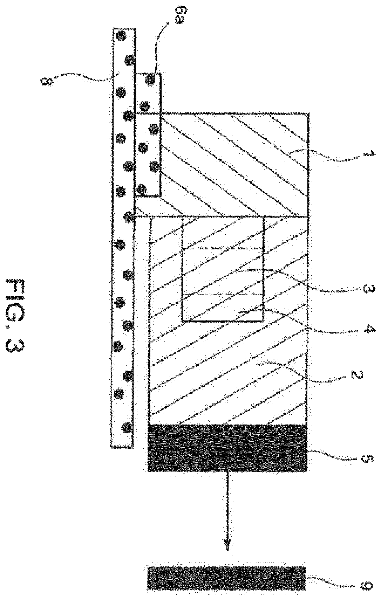

Fig. 3 shows a sectional view taken along section line BB of Figure 1.

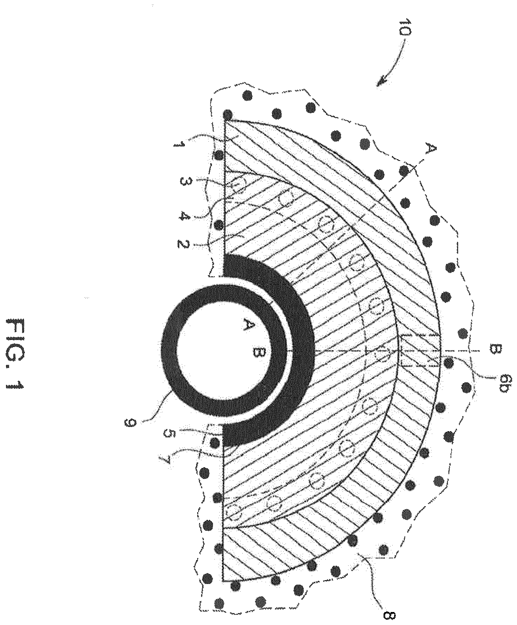

Figure 1 is a schematic view of a test probe 10 according to an embodiment of the invention. The test probe 10 serves for the non-destructive inspection of a test object, in this case a pipe 9, by means of ultrasound. A half-ring-shaped ultrasonic transducer 5 is connected to a housing 8 through a two-part mounting device 1, 2, with the former being depicted only in parts. The half-ring-shaped ultrasonic transducer 5 is glued to the second part 2, which is capable of absorbing well the radially acting contact forces required during gluing due to its curved shape.

The mounting device 1, 2 comprises two concentrically disposed, half-ring-shaped parts 1,2 connected by positive fit; an outer metallic part 1 and an inner part 2. The inner part 2 is produced from an epoxy resin composition comprising Araldit CY 221 and Araldit HY 956 as a hardener. The epoxy resin composition comprises as a filler bismuth oxide powder (D50 = 25 µm) and a ground and screened mixture of glass fibers and silicone rubber cross-linked at room temperature. The weight ratios are 60:12:500:30. The connection by positive fit between the first part 1 and the second part 2 is accomplished by inserting the first part 1 into a die and the resin, which is flowable prior to hardening, being introduced into the die in order to form the second part 2 after hardening. In the process, the second part 2 encloses the annular projection 4 formed on the first part 1 and penetrates the openings 3 formed in the projection 4. Thus, the part 1 and the part 2 form a positive tongue-and-groove connection, with the projection 4 of the first part 1 being embedded into the groove of the second part 2. The mechanically processable first part 1 serves for installation on a housing 8 which is in this case shown only in part.

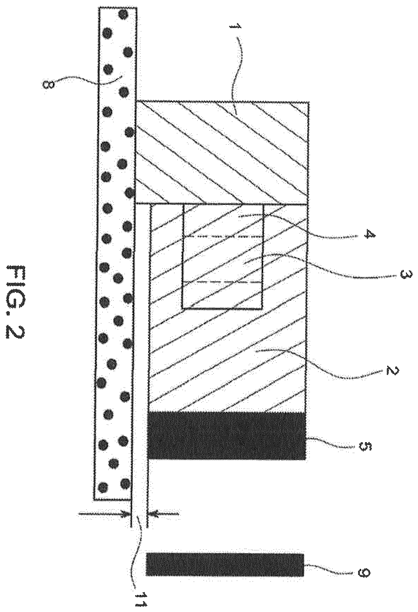

The mounting on the housing 8 comprises a fit of a groove 6b formed on the first part 1, into which a projection 6a on the housing latches. A reproducible local fixing of the mounting device 1, 2, and thus of the transducer 5, on the housing 8 is thus achieved. The second part 2 is configured in such a way that, upon mounting the first part 1 on the housing 8, it forms a gap 11 therewith, and not a contact area with the housing 8, as Fig. 2 shows.

## Claims

1. Multi-part mounting device (1, 2) for an ultrasonic transducer (5), comprising:
a first part (1) configured for mounting on a housing (8) of an ultrasonic test probe, the first part comprising a projection (4), and
a second part (2) which retains the ultrasonic transducer and is in contact with the ultrasonic transducer (5), the second part comprising a groove;
wherein the second part (2) is made of a first plastic and is connected by positive fit to the first part (1), and the first part (1) has a greater hardness than the second part (2);
wherein the positive fit comprises a positive tongue-and-groove connection formed by the projection (4) being embedded into the groove.

2. Multi-part mounting device (1, 2) according to the preceding claim, wherein the first part is substantially produced from a metallic and/or ceramic material and/or a second plastic with a greater Shore hardness than the first plastic.

3. Multi-part mounting device (1, 2) according to any one of the preceding claims, wherein the second part (2) is configured in such a way that, when the mounting device (1, 2) is mounted on the housing (8) of the ultrasonic test probe, it forms no contact area therewith.

4. Multi-part mounting device (1, 2) according to any one of the preceding claims, wherein the first part (1) is configured in such a way that it has no contact area with the ultrasonic transducer (5).

5. Multi-part mounting device (1, 2) according to any one of the preceding claims, wherein the first plastic comprises an epoxy resin, preferably a bisphenol A epoxy resin.

6. Multi-part mounting device (1, 2) according to any one of the preceding claims, wherein the first plastic comprises at least one particle-shaped filler.

7. Multi-part mounting device (1, 2) according to the preceding claim, wherein the particle distribution of the filler has a D50 value in the range of approximately or exactly 1 µm to approximately or exactly 100 µm, preferably in the range of approximately or exactly 10 µm to 50 µm, more preferably in the range of approximately or exactly 20 µm to approximately or exactly 30 µm, for example approximately or exactly 25 µm.

8. Multi-part mounting device (1, 2) according to any one of the preceding claims, wherein the second part (2) is connected to the first part (1) by partially overmolding the latter.

9. Multi-part mounting device (1, 2) according to any one of the preceding claims, wherein the projection (4) comprises at least one opening (3) for mounting the second part (2).

10. Multi-part mounting device (1, 2) according to any one of the preceding claims, wherein the second part (2) and the first part (1) are configured to be at least ring-segment-shaped.

11. Ultrasonic test probe (10), comprising at least one ultrasonic transducer (5), a housing (8) and a multi-part mounting device (1, 2) according to any one of the claims 1 to 10.

12. Ultrasonic test probe (10) according to the preceding claim, wherein the housing (8) and the first part (1) form a fit (6a, 6b), for example an interference fit.

13. Ultrasonic test probe (10) according to any one of the two preceding claims, comprising a transceiver (5) or a phased array.

14. Ultrasonic test probe (10) according to any one of the preceding claims 11 to 13, wherein the transducer(s) (5) define a curved or plane sound emitting surface facing a test object (9) to be inspected, and the second part (2) is disposed adjacent to the boundary surface (7) of the transducer (5) or transducers which is opposite to the sound emitting surface.

15. Ultrasonic testing device for ultrasound inspection of a test object, for example a pipe, comprising: at least one ultrasonic test probe according to any one of the preceding claims 11 to 14, an evaluation unit, and means for generating a relative movement between the at least one test probe and the test object.

## Patentansprüche

1. Mehrteilige Befestigungsvorrichtung (1, 2) für einen Ultraschallwandler (5), umfassend:
einen ersten Teil (1), der zum Anbringen an einem Gehäuse (8) einer Ultraschallprüfsonde konfiguriert ist, wobei der erste Teil einen Vorsprung (4) umfasst, und
einen zweiten Teil (2), der den Ultraschallwandler hält und in Kontakt mit dem Ultraschallwandler (5) ist, wobei der zweite Teil eine Nut umfasst;
wobei der zweite Teil (2) aus einem ersten Kunststoff hergestellt ist und durch Formschluss mit dem ersten Teil (1) verbunden ist und der erste Teil (1) eine größere Härte aufweist als der zweite Teil (2);
wobei der Formschluss eine formschlüssige Nut-und-Feder-Verbindung umfasst, die durch den Vorsprung (4) gebildet ist, der in die Nut eingebettet ist.

2. Mehrteilige Befestigungsvorrichtung (1, 2) nach vorstehendem Anspruch, wobei der erste Teil im Wesentlichen aus einem Metall- und/oder Keramikmaterial und/oder einem zweiten Kunststoff mit einer größeren Shorehärte als der erste Kunststoff hergestellt ist.

3. Mehrteilige Befestigungsvorrichtung (1, 2) nach einem der vorstehenden Ansprüche, wobei der zweite Teil (2) derart konfiguriert ist, dass, wenn die Befestigungsvorrichtung (1, 2) am Gehäuse (8) der Ultraschallprüfsonde befestigt ist, diese keine Kontaktfläche damit bildet.

4. Mehrteilige Befestigungsvorrichtung (1, 2) nach einem der vorstehenden Ansprüche, wobei der erste Teil (1) derart konfiguriert ist, dass er keine Kontaktfläche mit dem Ultraschallwandler (5) aufweist.

5. Mehrteilige Befestigungsvorrichtung (1, 2) nach einem der vorstehenden Ansprüche, wobei der erste Kunststoff ein Epoxidharz und bevorzugt ein Bisphenol A-Epoxidharz umfasst.

6. Mehrteilige Befestigungsvorrichtung (1, 2) nach einem der vorstehenden Ansprüche, wobei der erste Kunststoff mindestens einen partikelförmigen Füller umfasst.

7. Mehrteilige Befestigungsvorrichtung (1, 2) nach vorstehendem Anspruch, wobei die Partikelverteilung des Füllers einen D50-Wert im Bereich von annähernd oder genau 1 µm bis zu ca. oder genau 100 µm, bevorzugt im Bereich von ca. oder genau 10 µm bis 50 µm, mehr bevorzugt im Bereich von ca. oder genau 20 µm bis ca. oder genau 30 µm, beispielsweise ca. oder genau 25 µm aufweist.

8. Mehrteilige Befestigungsvorrichtung (1, 2) nach einem der vorstehenden Ansprüche, wobei der zweite Teil (2) mit dem ersten Teil (1) durch teilweises Umspritzen des Letzteren verbunden ist.

9. Mehrteilige Befestigungsvorrichtung (1, 2) nach einem der vorstehenden Ansprüche, wobei der Vorsprung (4) mindestens eine Öffnung (3) umfasst, um den zweiten Teil (2) zu befestigen.

10. Mehrteilige Befestigungsvorrichtung (1, 2) nach einem der vorstehenden Ansprüche, wobei der zweite Teil (2) und der erste Teil (1) konfiguriert sind, mindestens ringsegmentförmig zu sein.

11. Ultraschallprüfsonde (10), umfassend mindestens einen Ultraschallwandler (5), ein Gehäuse (8) und eine mehrteilige Befestigungsvorrichtung (1, 2) nach einem der Ansprüche 1 bis 10.

12. Ultraschallprüfsonde (10) nach vorstehendem Anspruch, wobei das Gehäuse (8) und der erste Teil (1) eine Passung (6a, 6b), wie beispielsweise eine Presspassung, bilden.

13. Ultraschallprüfsonde (10) nach einem der vorstehenden Ansprüche, die einen Transceiver (5) oder eine Phased-Array-Antenne umfasst.

14. Ultraschallprüfsonde (10) nach einem der vorstehenden Ansprüche 11 bis 13, wobei der bzw. die Wandler (5) eine gekrümmte oder flache Schallabstrahlungsfläche definieren, die einem zu überprüfenden Prüfobjekt (9) zugewandt ist, und der zweite Teil (2) neben der Grenzfläche (7) des Wandlers (5) oder von den Wandlern angeordnet ist, die sich gegenüber der schallabstrahlenden Fläche befindet.

15. Ultraschallprüfvorrichtung zur Ultraschallüberprüfung eines Prüfobjektes, wie beispielsweise eines Rohrs, umfassend: mindestens eine Ultraschallprüfsonde nach einem der vorstehenden Ansprüche 11 bis 14, eine Bewertungseinheit und Mittel zum Erzeugen einer Relativbewegung zwischen der mindestens einen Prüfsonde und dem Prüfobjekt.

## Revendications

1. Dispositif de montage à pièces multiples (1, 2) pour un transducteur ultrasonique (5), comprenant :
une première partie (1) configurée pour un montage sur un boîtier (8) d'une sonde d'essai ultrasonique, la première partie comprenant une saillie (4) et
une seconde partie (2) qui retient le transducteur ultrasonique et est en contact avec le transducteur ultrasonique (5), la seconde partie comprenant une rainure ;
dans lequel la seconde partie (2) est constituée d'une première matière plastique et est raccordée par ajustement positif à la première partie (1) et la première partie (1) a une dureté plus grande que celle de la seconde partie (2) ;
dans lequel l'ajustement positif comprend un raccord positif à languette et rainure formé par la saillie (4) qui est imbriquée dans la rainure.

2. Dispositif de montage à parties multiples (1, 2) selon la revendication précédente, dans lequel la première partie est sensiblement produite à partir d'un matériau métallique et/ou céramique et/ou d'une seconde matière plastique avec une dureté Shore plus élevée que celle de la première matière plastique.

3. Dispositif de montage à parties multiples (1, 2) selon l'une quelconque des revendications précédentes, dans lequel la deuxième partie (2) est configurée de manière que, lorsque le dispositif de montage (1, 2) est monté sur le boîtier (8) de la sonde d'essai ultrasonique, il ne forme pas de zone de contact avec celle-ci.

4. Dispositif de montage à parties multiples (1, 2) selon l'une quelconque des revendications précédentes, dans lequel la première partie (1) est configurée de manière qu'elle n'ait pas de zone de contact avec le transducteur ultrasonique (5).

5. Dispositif de montage à parties multiples (1, 2) selon l'une quelconque des revendications précédentes, dans lequel la première matière plastique comprend une résine époxyde, de préférence une résine époxyde de bisphénol A.

6. Dispositif de montage à parties multiples (1, 2) selon l'une quelconque des revendications précédentes, dans lequel la première matière plastique comprend au moins une charge de forme particulaire.

7. Dispositif de montage à parties multiples (1, 2) selon la revendication précédente, dans lequel la distribution particulaire de la charge a une valeur D50 dans la plage d'environ ou exactement de 1 µm à environ ou exactement 100 µm, de préférence dans la plage d'environ ou exactement 10 µm à 50 µm, mieux encore dans la plage d'environ ou exactement 20 µm à environ ou exactement 30 µm, par exemple environ ou exactement 25 µm.

8. Dispositif de montage à parties multiples (1, 2) selon l'une quelconque des revendications précédentes, dans lequel la seconde partie (2) est raccordée à la première partie (1) par surmoulage partiel de celle-ci.

9. Dispositif de montage à parties multiples (1, 2) selon l'une quelconque des revendications précédentes, dans lequel la saillie (4) comprend au moins une ouverture (3) pour monter la seconde partie (2).

10. Dispositif de montage à parties multiples (1, 2) selon l'une quelconque des revendications précédentes, dans lequel la seconde partie (2) et la première partie (1) sont configurées pour être au moins en forme de segment annulaire.

11. Sonde d'essai ultrasonique (10) comprenant au moins un transducteur ultrasonique (5), un boîtier (8) et un dispositif de montage à parties multiples (1, 2) selon l'une quelconque des revendications 1 à 10.

12. Sonde d'essai ultrasonique (10) selon la revendication précédente, dans laquelle le boîtier (8) et la première partie (1) forment un ajustement (6a, 6b), par exemple un joint à ajustement serré.

13. Sonde d'essai ultrasonique (10) selon l'une quelconque des deux revendications précédentes, comprenant un émetteur-récepteur (5) ou un réseau piloté en phase.

14. Sonde d'essai ultrasonique (10) selon l'une quelconque des revendications précédentes 11 à 13, dans laquelle le ou les transducteurs (5) définit ou définissent une surface émettrice de son courbe ou plane en regard d'un objet d'essai (9) à inspecter et la seconde partie (2) est disposée adjacente à la surface limite (7) du transducteur (5) ou des transducteurs qui est en regard de la surface émettrice de son.

15. Dispositif d'essai ultrasonique pour inspection ultrasonique d'un objet d'essai, par exemple un tuyau, comprenant au moins une sonde d'essai ultrasonique selon l'une quelconque des revendications 11 à 14, une unité d'évaluation et des moyens permettant de générer un mouvement relatif entre la au moins une sonde d'essai et l'objet d'essai.
